# EUROPEAN PATENT SPECIFICATION

(11) **EP 2 926 112 B1**
(45) Date of publication and mention of the grant of the patent: **02.03.2016**
(21) Application number: 13795781.7
(22) Date of filing: 27.11.2013
(51) Int. Cl.: G01N 11/00, G01N 3/08, C08F 2/34, C08F 110/02, C08F 2/01

(54) **DEVICE AND METHOD FOR DETERMINING RHEOLOGICAL PROPERTIES OF POLYMERISATION PRODUCT**
VORRICHTUNG UND VERFAHREN ZUM QUANTIFIZIEREN EINER POLYMERISATIONSREAKTION
DISPOSITIF ET PROCÉDÉ POUR LA QUANTIFICATION D'UNE RÉACTION DE POLYMÉRISATION

(30) Priority: 27.11.2012 EP 12290411; 17.07.2013 EP 13290167
(43) Date of publication of application: 07.10.2015
(73) Proprietor: Total Research & Technology Feluy, 7181 Seneffe (BE); Centre National de la Recherche Scientifique (CNRS), 75016 Paris (FR)
(72) Inventor: LAVASTRE, Olivier, F-35490 Gahard (FR); DARSY, Guillaume, B-F-87000 Limoges (BE)
(74) Representative: Raboin, Jean-Christophe
(86) International application number: PCT/EP2013/074827
(87) International publication number: WO 2014/083039

(56) References cited:
- EP-A1- 0 210 689
- EP-A2- 1 158 290
- WO-A1-90/08309
- WO-A1-94/25871
- WO-A2-2006/007094
- NL-A- 7 904 902
- US-A- 3 805 598
- US-A- 3 933 032
- US-A- 4 699 000
- US-A1- 2003 054 740

## Description

### FIELD OF THE INVENTION

The present invention is in the field of determination of rheological properties of a polymer product of a polymerisation reaction, more preferably a device and method for high-throughput determination of rheological properties of a plurality of polymerisation products yielded by a plurality of polymerisation reactions.

### BACKGROUND OF THE INVENTION

Polymers such as polyethylene (PE) are synthesized by polymerizing ethylene (CH₂=CH₂) monomers. Because it is cheap, safe, stable to most environments and easily processed polyethylene polymers are useful in many applications. Polyethylene can be classified into several types, such as but not limited to LDPE (Low Density Polyethylene), MDPE (Medium Density Polyethylene), HDPE (High Density Polyethylene) and LLDPE (Linear Low Density Polyethylene) as well as High Molecular Weight (HMW), Medium Molecular Weight (MMW) and Low Molecular Weight (LMW). Each type of polyethylene has different properties and characteristics.

Polymers may be formed under slurry conditions with the produced polymer usually in the form of solid particles suspended in diluent. Slurry conditions typically found in a loop reactor where the slurry is circulated continuously to maintain efficient suspension of the polymer product and the liquid diluent.

Alternatively, polymers may be formed in the gas phase by feeding into a gas phase reactor gaseous monomer and polymerization catalyst. The types of polymeric product and efficiency of the reaction are to some extent dependent on the catalyst and catalyst concentration. A problem with evaluating catalysts is the need to perform each polymerization reaction in a separate gas phase reactor, and then subsequently to characterise one or more rheological properties of the products. When there is a plurality of catalysts, optimization of conditions becomes limited by the number of reactors available that will allow polymerization simultaneously under identical conditions.

In the prior art, WO patent No 2006/007094 A2 discloses an idea of creating an array of polymer products under identical conditions by the gas-phase polymerisation and screening of resulting properties including any physical and mechanical properties. Method of WO 2006/007094 A2 comprises inserting a library of catalysts composition in an array format into a gas chamber and screening of resulting properties.

Moreover, US patent No 2003/054740 A1 discloses a method for screening an array of materials for strength, with samples dispensed to individually addressable regions on the substrate. Forces used for screening, including compression forces, are measured or monitored as they are applied. The rheological properties of the polymers are calculated from the applied forces. However, none of the documents is disclosing a system that allows both polymerisation under identical conditions from one or more catalysts, and an accurate screening system of rheological properties of the resulting polymer products by applying a compression force.

Consequently, there is a need in the art for new system that allows polymerization under identical conditions from one or more catalysts, and more in particular, an accurate screening system.

### SUMMARY OF SOME EMBODIMENTS OF THE INVENTION

The inventors have now found that these needs can be met either individually or in any combination by the method of the present invention.

According to a first aspect, the present invention provides a method for determining one or more rheological properties of a polymer product (40), comprising the steps:
- gradually compressing the polymer product (40) during a compression phase;
- measuring force applied to the polymer product (40) during at least part of the compression phase; and
- determining from a degree of compression of the polymer product as a function of the measured force, one or more rheological properties of the polymer product (40).

The polymer product (40) may provided on a sub-region (22) of a receiving surface (21) of a product support member (20); the polymer product (40) may be gradually compressed between a force sensor (62) and the product support member (20); and the one or more rheological properties may be determined from the output of the force sensor (62) as a function of the degree of compression of the polymer product. The polymer product may be formed by dispensing polymerisation catalyst onto the sub-region (22) of the receiving surface of the product support member (20), placing the product support member (20) into a gas phase polymerisation reactor, performing a gas-phase catalysed polymerisation reaction, to form the polymer product (40) on the receiving surface of the product support member (20), and removing the product support member (20) from the gas phase polymerisation reactor, thereby providing the polymer product (40) on a sub-region (22) of a receiving surface of a product support member (20) for determination of the one or more rheological properties. The present invention also provides a method for determining simultaneously for each of a plurality of separate polymer products (40i, 40ii, 40iii, 40iv), one or more rheological properties comprising performing the method as described herein, wherein each polymer product of the plurality (40i, 40ii, 40iii, 40iv) is simultaneous and separately gradually compressed, the force applied to each polymer product (40i, 40ii, 40iii, 40iv) during at least part of the gradual compression is measured, and one or more rheological properties of each polymer product (40i, 40ii, 40iii, 40iv) is determined from the degree of compression as a function of the measured force. Each of the plurality of polymer products (40i, 40ii, 40iii, 40iv) may be provided on a separate sub-region (22i, 22ii, 22iii, 22iv) of the receiving surface of the product support member (20), each of the plurality of polymer products (40i, 40ii, 40iii, 40iv) is contacted with a separate force sensor (62i, 62ii, 62iii, 62iv), each of the plurality of polymer products is simultaneously compressed between the force sensors and the product support member; and and one or more rheological properties of each of the plurality of polymer products (40i, 40ii, 40iii, 40iv) is determined from a degree of compression as a function of the measured force. The polymer product (40) is gradually compressed during the compression stage, the polymer product (40) may be subsequently gradually uncompressed during an uncompression stage, the force applied to the polymer product (40) may be measured during at least part of the compression stage and at least part of the uncompression stage; and the one or more rheological properties of the polymer product (40) may be determined from the degree of compression as a function of the measured force during the compression and uncompression stages.

According to a second aspect, the present invention provides a device for determining one or more rheological properties of a polymer product (40), comprising a product support member (20) provided with a sub-region (22) on a receiving surface for supporting the polymer product (40), a force sensor (62), and a displacement mechanism (50) for changing the distance between the product support member (20) and the force sensor (62).The device may further comprise a distance indicator (72), configured to provide a indication of the distance between the force sensor (62) and the product support member (20) The device may further comprise a computer processor, configured to:a) receive data from the distance indicator (72); b) receive data from the force sensor (62); and c) calculate from the data received in a) and b), one or more rheological properties of the polymer product. The displacement mechanism may be configured to apply compression force to the polymer product and/or release compression force from the polymer product. The present invention also provides a device for determining simultaneously for each of a plurality of separate polymer products (40i, 40ii, 40iii, 40iv), one or more rheological properties comprising the device as described herein, wherein: a plurality of separate sub-regions (22i, 22ii, 22iii, 22iv) is provided on the receiving surface for supporting each of the polymer products (40i, 40ii, 40iii, 40iv) in the plurality; and a plurality of force sensors (62i, 62ii, 62iii, 62iv) is provided for supporting each of the polymer products in the plurality. The force sensors may be provided on a sensor supporting member (70). The product support member (20) may be detachable from the device.

### FIGURE LEGENDS

**FIG. 1** is a side view of a device described herein comprising a single sub-region disposed on a receiving surface of a product support member and force sensor attached to a supporting surface of a sensor-supporting member.
**FIG. 2** is a side view of a device described herein comprising a plurality of sub-regions disposed on a receiving surface of a product support member and a plurality of complementary force sensors attached to a supporting surface of a sensor-supporting member.
**FIG. 3** is a side view of a device described herein comprising four separate polymer products, sub-regions, and force sensors. The force sensors are clear of the reaction product.
**FIGs. 3A to 3C** show a sequence of advancement of the second rigid surface, until each polymer product is in contact with a force sensor and is under compression.
**FIG. 4** is a schematic representation of an automatic device described herein for quantifying four separate polymerisation reactions.
**FIG. 5** is a graph showing the degree of compression (micrometric screw position) against force (sensor resistance) applied to the seven different polymer products. The each of the products is compressed then uncompressed.
**FIG. 6** is a graph showing a linear trend of each curve of FIG. 5 in the compression phase.

### DETAILED DESCRIPTION OF THE INVENTION

Before the present method used in the invention is described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The present invention relates to a method and device for determining one or more rheological properties of one or a plurality of polymer products. In particular, it relates to a method and device for the measurement of relative rheological properties of a plurality of polymer products. In particular, it allows the simultaneous measurement of the rheological properties of a plurality of polymer products. The polymers products may have been formed during a catalysed polymerisation reaction. The catalysed polymerisation reaction is preferably an ethylene (CH₂=CH₂) polymerisation. The polymer under test is preferably an elastically deformable polymer. The polymer product may be heated prior to and during testing; the temperature may be set below the melting temperature of the polymer product. The temperature may be set below the melting temperature of the polymer product by, for instance, by more than 5°C, 5-10 °C, 10-15 °C, 15-20 °C, or 20-25 °C.

The inventors have found that by gradually compressing the polymer product, and measuring the force gradually applied to the polymer product during compression, one or more rheological properties of the polymer product may be determined from the force as a function of the degree of compression. The degree of compression is an indication of the length by which the polymer product has been compressed during the gradual compression. The inventors have further found that gradually uncompressing the compressed polymer product, and measuring the force applied to the polymer product as a function of the degree of compression during the gradual uncompression, one or more rheological properties of the polymer product can be determined. Typically, the data collected during the compression phase and uncompression phase where acquired, are combined. The data collected from the polymer product(s) may be compared with one or more known standard samples which have been measured using the device and method of the invention.

According to a first embodiment, the present invention relates to a method for determining one or more rheological properties of a polymer product, comprising the steps:
- gradually compressing the polymer product;
- measuring the force applied to the polymer product during at least part of the gradual compression;
- determining from a degree of compression as a function of the measured force, one or more rheological properties of the polymer product.

The polymer product is gradually compressed during a compression phase.

According to one aspect of the invention,
- the polymer product is provided on a sub-region of a receiving surface of a product support member;
- the polymer product is gradually compressed between a force sensor and the product support member; and
- the one or more rheological properties is determined from the output of the force sensor (62) as a function of the degree of compression of the polymer product.

The method advantageously may be utilised to determine simultaneously one or more rheological properties of a plurality of separate polymer products. A plurality refers to 2 or more, for instance, 3, 4, 5, 6, 7, 8, 9, 10, 12, 14, 16 18, 20 or more. The method accordingly facilitates high-throughput screening of a range of separate polymer products. In such case :
- each polymer product of the plurality is simultaneous and separately gradually compressed;
- the force applied to each polymer product during at least part of the gradual compression is measured; and
- one or more rheological properties of each polymer product is determined from the degree of compression as a function of the measured force.

Preferably, each of the polymer products is gradually compressed simultaneously. Preferably, during the gradual compression, the distance between the force sensor and the product support member is the same for each and every polymer product. In other words, the distance between the force sensor and the product support member is the same for each and every polymer product. Accordingly, a method for determining simultaneously for each of a plurality of separate polymer products, one or more rheological properties is the same as described above, wherein
- each of the plurality of polymer products is provided on a separate sub-region of the receiving surface of the product support member;
- each of the plurality of polymer products is contacted with a separate force sensor;
- each of the plurality of polymer products is simultaneously gradually compressed between the force sensor and the product support member;
- one or more of rheological properties of each of the plurality of polymer products is determined from a degree of compression as a function of the measured force.

As mentioned, additional rheological information might be obtained by further measuring the force applied to the polymer product during at least part of an uncompression of the compressed polymer. One or more rheological properties of the polymer product would be determined from the degree of compression as a function of the measured force during both the compression and uncompression. Thus, according to one aspect of the invention:
- the polymer product is gradually compressed during a compression stage;
- the polymer product is subsequently gradually uncompressed during an uncompression stage;
- the force applied to the polymer product is measured during at least part of the compression and uncompression stage; and
- the one or more rheological properties of the polymer product are determined from the degree of compression of the polymer as a function of the measured force during the compression and uncompression stages.

According to a second embodiment, the present invention relates to a device for determining one or more rheological properties of a polymer product, comprising:
- a product support member provided with a sub-region on a receiving surface for supporting the polymer product;
- a force sensor; and
- a displacement mechanism for changing the distance between the product support member and the force sensor.

The displacement mechanism facilitates movement between the product support member and the force sensor, so that the polymer product may be compressed between these elements.

The device may further comprise a distance indicator configured to measure distance between the product support member and the force sensor.

The device may advantageously be utilised to determine simultaneously one or more rheological properties of a plurality of separate polymer products. Accordingly, the device for determining simultaneously for each of a plurality of separate polymer products, one or more rheological properties is the same as described above, wherein
- a plurality of separate sub-regions is provided on the receiving surface for supporting each of the polymer products (one sub-regions for each of the plurality of polymer products); and
- a plurality of force sensor is provided (one force sensor for each of the plurality of polymer products).

The device may be configured for the measurement of force recorded by the sensor as a function of an indication of the distance between the product support member and the force sensor. One aspect is a device for performing the mention of the invention.

The method and device may be used to measure one or more rheological properties of the polymer products of a catalysed gas-phase polymerisation. The polymerisation may performed in the gas phase, for instance, in a pressured reactor such as an autoclave reactor, in which the monomer (*e.g.* ethylene) and optionally one or more co-monomers (*e.g.* butene), and optionally other reagents (e.g. hydrogen) are fed, and are in the gaseous phase or an aerosol. The polymer product does not circulate, and may not be agitated, but is retained on the receiving surface of the product support member, where it forms the reaction pile. Hence, the catalysed gas-phase polymerisation may be performed on the receiving surface of the product support member, in a batch mode of operation. The inventors have found that a polymerisation reaction performed in the gas phase on the receiving surface of the product support member yields a reaction product in the form of a pile or heap. The reaction product pile is maintained in the form of a pile, typically having a conical shape, on the receiving surface by the force of gravity. Each reaction pile is formed on the receiving surface. After performing the reaction, the polymer product on the product support member is transferred to the method or device of the invention. In particular, the method and device finds utility in the comparative measurement of one or more rheological properties of each the plurality of polymers each made using a different catalyst, using the same catalyst at different concentrations, when catalysing a polymerisation reaction using otherwise the same reagents. In particular, the method or device may provide an array of sub-regions on the receiving surface of the product support member. Separate polymerisation reactions may be performed in the gas phase in the separate sub-regions on the product support member giving rise to a plurality of distinct reaction product piles. It is preferred that, prior to the step of gradually compressing the polymer product, the product support member is removed from a gas-phase polymerisation reactor. The step of gradually compressing the polymer product is preferably performed after the product support member have been removed from a gas-phase polymerisation reactor.

Accordingly, according to one aspect of the invention, the polymer product is formed by:
- dispensing polymerisation catalyst onto the sub-region of the receiving surface of the product support member;
- placing the product support member into a gas-phase polymerisation reactor, and performing a gas-phase catalysed polymerisation reaction, to form the polymer product that is retained on the receiving surface of the product support member;
- removing the product support member, thereby providing the polymer product on a sub-region of a receiving surface of a product support member for determination of the one or more rheological properties.

According to one aspect of the invention, the force sensor is a sensor provided for the measurement of force applied to the polymer product. The force sensor may be any known in the art. Typically, a force sensor is a force-sensitive device that changes electrical properties responsive to the application of mechanical force. It may be a mechanical force sensor, or a force sensor, or a touch sensor, for instance. The force sensor may be a force transducer. The electrical property includes resistance or current generation. The force sensor is sufficiently sensitive to detect by contact the tip of polymer product. A wide dynamic range of the force sensor may be chosen that can report the compression forces applied to polymers having a wide variety of rheological properties. The dynamic range of the force sensor may be chosen to complement the force range of the polymer product samples. A force sensor is preferably connectable to a computer interface (*e.g.* Universal Serial Bus) so that measurements can be recorded electronically. An example of a suitable force sensor is the Flexiforce ® sensor manufactured by Tekscan.

Compressing or compression of the polymer product refers to reducing the dimension or length of the polymer product in one or more directions, most preferably in one direction. The direction is typically in a straight line. The direction is typically perpendicular to the receiving surface of the product support member. The compression is achieved by applying a compressive force to the polymer, using for instance a clamp. A force is applied to the polymer product to achieve compression. The compression is applied gradually (step wise) over time, and measurements of the force applied during the period of compression, at least some of the steps, are taken. Uncompressing or uncompression refers to releasing compressive forces; in the case of an elastically deformable polymer product, the polymer product would return to its original dimension in the compressed direction. The uncompression is applied gradually (step wise) over time, and measurements of the force applied during the period of compression are taken.

The degree of compression is an indication of the change in dimension or length of the polymer product compared with the original dimension or length, in the same direction. When the polymer is being compressed, degree of compression is the dimension or length after a compression step compared with the original dimension or length, in the same direction. When the polymer is being uncompressed from a compressed state, degree of compression is the dimension or length after an uncompression step compared with the original dimension or length, in the same direction.

The degree of compression may be a direct indicator or an indirect indicator of the change in dimension. A direct indicator might be, for instance, the ratio of length of the polymer product in the compressed direction compared with the original length in the same direction. An indirect indicator might be, for instance, the number of turns of a threaded screw that displaces the sensor. From the indirect indictor, the direct indicator may be calculated. From the relationship between degree of compression and measure force, the one or more rheological properties of polymer product can be determined.

The degree of compression may be measured using any technique. Typically a value related to the distance between the force sensor and the product support member is used. The distance where an advancing force sensor first touches the polymer product may be used to determine the original dimension of the polymer product. In order to determine the distance between the force sensor and the product support member, and hence calculate the degree of compression, the device may incorporate a distance indicator.

A distance indicator may comprise a detector such as a range finder (ultrasonic, infrared, laser), a laser scanner, or a camera configured for distance measurement. Alternatively, the distance indicator may be a graduated scale. The scale may be attached at one end to the SSM, and the distance against the product support member read off. Alternatively, the scale may be attached at one end to the product support member, and the distance against the SSM member read off. The scale may be read manually or be incorporated into a linear encoder. Alternatively, the distance indicator may provide an indication of the number of turns of a threaded rod implemented in a displacement mechanism, configured to displace the force sensor and the product support member by the application of a torque to the threaded rod. The number of turns may be read manually or be incorporated into a rotary encoder. Preferably, the distance indicator is configured to provide an indication of a change of distance between the force sensor and the product support member during measurement. The distance indicator may be configured to provide readings after the distance between the SSM and the product support member has changed. The distance indicator may be configured to provide readings continuously or frequently.

The distance between the force sensor and the sub-region may be controllable using a displacement mechanism. The distance between the product support member and the force sensor may be controllably adjustable using the displacement mechanism. The force sensor may be displaceable relative to the product support member, or the product support member may be displaceable relative to the force sensor, or the product support member and the force sensor may be displaceable relative to each other. The displacement mechanism is configured to change the distance such that compression is applied to the polymer product. The displacement mechanism may configured to change the distance such that polymer product is uncompressed. The displacement mechanism may be configured to displace gradually the force sensor relative to the sub-region, or to displace the sub-region relative to the force sensor, or to displace both.

The displacement mechanism is preferably configured to apply compression force to the polymer product. The displacement mechanism is preferably further configured to release the compression force, applied the polymer product. The displacement mechanism is preferably configured to apply controllably compression force to the polymer product to achieve a degree of compression (ratio length compressed polymer to length uncompressed polymer) equal to or less than 0.9, 0.8, 0.7, 0.6, 0.5, 0.4, 0.3, 0.2 or 0.1, most preferably between 0.7 to 0.1. The displacement mechanism is preferably further configured to controllably release the compression force, thereby increasing the degree of compression. According to one aspect of the invention, the displacement mechanism is configured to apply a force to the polymer product equal to or below the limit of the force sensor.

The force sensor may be fixed *i.e.* not displaceable during measurement. Alternatively, the force sensor may be provided in displaceable relation to the sub-region of the receiving surface of the product support member. Preferably, the force sensor is linearly displaceable - that is to say, it follows the path of a straight line in the direction of the corresponding sub-region. However, other patterns of displacement are foreseen, such as arc, cam or other movements. The path of displacement by the force sensor is towards the sub-region. Preferably, the path is essentially perpendicular to the sub-region. The direction of displacement is towards the sub-region. Preferably, the force sensor is displaceable in a straight line that extends through the sub-region.

The device is configured to align the force sensor with the sub-region. Preferably, the displacement mechanism is configured to position the force sensor in a starting position that is clear of the top of the polymer product. The displacement mechanism may be configured to place the force sensor during measurement in contact with the polymer product.

The minimum range of movement adjustable by the displacement mechanism suffices to bring the force sensor from a starting position clear of the polymer product, into contact with the polymer product during measurement.

The displacement mechanism may be configured to position the sub-region in a starting position such that the force sensor is clear of the top of the polymer product. The displacement mechanism may be configured to place the polymer product during measurement in contact with the force sensor. Hence, the minimum range of movement adjustable by the displacement mechanism suffices to bring the polymer product from a starting position into contact with the force sensor during measurement. The minimum range of movement adjustable by the displacement mechanism suffices to bring the sub-region from a starting position clear of the polymer product, into contact with the polymer product during measurement.

The displacement mechanism may be manually, or electrically, hydraulically or pneumatically operated. In a preferred embodiment, the displacement mechanism comprises one or more (*e.g.* 2, 3, 4 or 5 or more) screw threaded rods. One end of the threaded rod may be revolutely attached in relation to the one of the pair of elements, which pair of element comprises the product support member and the SSM or force sensor, and the thread engages with a complementarily threaded keeper attached in relation to the other of the pair. Rotation of the threaded rod results in a linear movement of one element in relation to the other. The direction of displacement depends on the direction of rotation of the rod. The threaded rod may be incorporated into a micrometric screw. In another embodiment, the displacement mechanism comprises one or more (*e.g.* 2, 3, 4 or 5 or more) rack and pinion assemblies.

Typically, the output of the force sensor (*e.g.* a resistance value) is plotted against an indication of the distance travelled by the force sensor or by the receiving surface of the product support element (*e.g.* the position of a micrometric screw). Rheological information obtained using the method of the invention includes an indication of the elastic or inelastic deformity of the polymer product, or the compressibility of the polymer product, or a combination of these. A comparison with one or more standards allows the classification of a polymer product. The rheological properties of the one or more standards may be measured according to the method and the device described herein. The rheological properties may be measured at the same time as those of the polymer product e.g. they may be placed onto the receiving surface of a product support member.

The product support member is provided with a receiving surface for receiving or supporting one or more polymer products. The receiving surface is typically essentially planar. In particular, the receiving surface is provided with the sub-region for receiving or supporting the polymer product. The sub-region may be a delimited sub-area of the receiving surface. It may be marked, or indented, or otherwise indicated. Equally, it may not be indicated. The product support member may be essentially rigid. The product support member is able to withstand compression forces arising from contact with the force sensor and subsequent compression of the polymer product. Preferably, the product support member plate is dismountable from the device. The product support member is preferably a flat, sheet of rigid material. Preferably the product support member is comprised in a glass plate.

Preferably, the product support member is suitable as a carrier for carrying out the polymerisation reactions in the gas phase. As such, it may be configured for receiving, and retaining an aliquot or separate aliquots of the polymerisation catalyst. Product support member preferably exhibits an inherent inertness and ability to withstand the temperatures and pressures of the reactor conditions. It is preferably made at least partially, preferably entirely from glass. Once the polymerisation has been performed, the product support member may be transferred directly for incorporation into the device or method of the invention for measurement of one or more rheological properties of the polymer product. Accordingly, the product support member, may be configured for removable insertion into the gas-phase polymerisation reactor. The product support member may be detachable from the device .

The receiving surface may be provided with one or more (*e.g.* 1, 2, 3, 4, 5, 6, 7, 8, 9, 10, 11, 12 or more) sub-regions. A plurality of sub-regions allows a high throughput screening of different catalysts and/or concentrations facilitated by the simultaneous quantification of reaction yields using the present device and method. The sub-regions are spatially separated. Where there is a plurality of sub-regions, they may be arranged in a line (*e.g.* 1 x 3, 1 x 4, 1 x 8, 1 x 12) or in an array (*e.g.* 2 x 2, 3 x 2, 3 x 3, 8 x 12 etc). The plurality of plurality of sub-regions is preferably provided on the receiving surface of a single product support member.

The force sensor is or plurality of force sensors are preferably provided on a sensor-supporting member (SSM), or more precisely, on a supporting surface of the sensor-supporting member. The SSM is preferably essentially rigid. The SSM, or more precisely, the supporting surface is preferably essentially planar. The SSM, or more in particular the supporting surface thereof, may be made at least partly, preferably entirely, from glass, metal, composite, or polymeric material.

The SSM may be provided with one or more (*e.g.* 1, 2, 3, 4, 5, 6, 7, 8, 9, 10 or 12 or more) force sensors. Each force sensors is preferably rigidly attached to the SSM. The detecting part of the force sensor may be positioned away from the SSM *i.e.* in the direction of the product support member. A plurality of force sensors allows a high throughput screening of polymer products, and/or different catalysts and/or concentrations facilitated by the simultaneous quantification of reaction yields using the present device and method. The force sensors are spatially separated. Where there is a plurality of force sensors, they may be arranged in a line (*e.g*. 1 x 3, 1 x 4, 1 x 8, 1 x 12) or in an array (*e.g.* 2 x 2, 3 x 2, 3 x 3, 8 x 12 etc). The plurality of force sensors is preferably provided on a single SSM, preferably on the same supporting surface.

Corresponding to the plurality of sub-regions of the product support member may be a complementary spatial arrangement of force sensors attached to a sensor supporting member such that the force sensors are aligned with the respective sub-regions. By providing a plurality of sub-regions and force sensors onto their respective rigid surfaces, compression forces can be applied to (or released from) the polymer products simultaneously.

The product support member and the SSM may be mutually parallel. Preferably, the product support member and the SSM are horizontal. Preferably, the product support member is below the SSM. Preferably, the SSM is above the product support member. Preferably, the product support member and the SSM overlap. Preferably, the SSM is above the product support member. The product support member disposed with sub regions is adjacent to the SSM disposed with force sensors. Preferably, the device is configured to place the product support member opposite the SSM, and the plurality of sub-regions and plurality of force sensors in mutual alignment for the compression of the polymerisation products. The mutual alignment may be achieved by disposing the force sensors in a pattern on the product support member and having the same pattern mirrored on the SSM of force sensors.

The SSM may be displaceable relation to the product support member. The SSM may be linearly displaceable - that is to say, it follows the path of a straight line in the direction of the product support member. However, other patterns of displacement are foreseen, such as arc, cam or other movements. The path of displacement by the rigid SSM is towards the product support member. Preferably, the path is essentially perpendicular to the product support member. The direction of displacement is towards the product support member. Preferably, the SSM is displaceable in a straight line that can be extrapolated through the product support member. Preferably, the SSM and the product support member remain parallel to each other during displacement.

It will be appreciated that the above description concerning the relation and movements between the product support member and SSM applies equally to the receiving surface of the product support member and the supporting surface of the SSM respectively.

The method and device of the invention may further comprise a computer processor for determining the one or more rheological properties of each polymer product. The computer processor may be configured to receive data from the force sensor or plurality of force sensors, and data from the distance indicator (*i.e.* data concerning the degree of compression of the polymer product or polymer products), and to determine the one or more rheological properties of each polymer product. According to one aspect, the computer processor may calculate the degree of compressibility of the polymer product from the data received from the force sensor or plurality of force sensors, and data from the distance indicator

The processor may be linked with a computer-readable storage medium for storage of data outputted by the force sensor or force sensors and/or for storage of data outputted by the distance indicator. The stored data may later be processed to determine the one or more rheological properties of each polymer product.

Accordingly, the device of the invention may further a computer processor, configured to:
a) receive data from the distance indicator;
b) receive data from the force sensor; and
c) calculate from the data received in a) and b), one or more rheological properties of the polymer product. The rheological properties may include compressibility, elastic or inelastic deformation, or a combination of these.

The present invention also provides a method for determining one or more rheological properties of a polymer product using a device of the invention. The present invention also provides a use of a device of the invention for determining one or more rheological properties of a polymer product. The present invention also provides a method for screening the activity of a plurality of catalysts for a gas-phase polymerisation reaction using a method or device of the invention. The present invention also provides a use of a device of the invention for screening one or more rheological properties of a plurality of polymer products. The steps of the methods describe herein may or may not be performed in the order stated.

The present invention also provides a method for determining one or more rheological properties of a polymer product from a catalysed gas-phase polymerisation reaction using a device of the invention. The present invention also provides a use of a device of the invention for determining one or more rheological properties a polymer product of a catalysed gas-phase polymerisation reaction. The present invention also provides a method for screening the effects of a plurality of catalysts in a gas-phase polymerisation reaction on or more rheological properties of the resulting polymer products using a method or device of the invention. The present invention also provides a use of a device of the invention for screening the effects of a plurality of catalysts in a gas-phase polymerisation reaction on or more rheological properties of the resulting polymer products. The steps of the methods describe herein may or may not be performed in the order stated.

One or more sub-regions of the receiving surface of the product support member may be provided with reagents of the polymerisation reaction for subsequent polymerisation, for instance catalyst. Catalyst may be added by a method comprising the steps:
i) applying an adhesive layer to the receiving surface of the product support member, and
ii) adding a catalyst solid support layer by applying at least one dry-particulate catalyst solid support to the adhesive layer.

Step i) is performed prior to step ii). A mask may be applied over the adhesive layer, or over the catalyst support layer, which mask comprises a plurality of apertures, each aperture corresponding to a sub-region. There a plurality of catalysts, there may be a corresponding number of apertures in the mask.

The dry-particulate catalyst solid support may comprise one or more of solid inorganic oxides, silica, alumina, magnesium oxide, titanium oxide, thorium oxide, mixed oxides of silica, Group 2 or 13 metal oxides, silica-magnesia, silica-alumina mixed oxides, talc, resin, polyolefin.

One or more compositions comprising at least one catalyst may be added to the catalyst solid support layer. The term "composition comprising at least one catalyst" as used herein refers to a substance comprising one or more catalysts, optionally together with one or more co-catalysts and/or optionally together with one or more activating agents. The composition comprising one or more catalysts is applied into a region or zone of the catalyst solid support layer. The catalyst may be applied in a suitable carrier solvent such as toluene.

As used herein, the term "catalyst" refers to a substance that causes a change in the rate of a polymerization reaction without itself being consumed in the reaction. In the present invention, the catalysts are especially suitable for the polymerization of olefin monomers and co-monomers to polyolefins, for example, the polymerization of ethylene to polyethylene, or propylene to polypropylene. Examples of a catalyst include metallocene catalyst, chromium catalyst, or Ziegler-Natta catalyst.

The term "metallocene catalyst" is used herein to describe any transition metal complexes consisting of metal atoms bonded to one or more ligands. The metallocene catalysts are compounds of Group IV transition metals of the Periodic Table such as titanium, zirconium, hafnium, etc., and have a coordinated structure with a metal compound and ligands composed of one or two groups of cyclo-pentadienyl, indenyl, fluorenyl or their derivatives. Use of metallocene catalysts in the polymerization of polyethylene has various advantages. The key to metallocenes is the structure of the complex. The structure and geometry of the metallocene can be varied to adapt to the specific need of the producer depending on the desired polymer. Metallocenes comprise a single metal site, which allows for more control of branching and molecular weight distribution of the polymer. Monomers are inserted between the metal and the growing chain of polymer.

In an embodiment, the metallocene catalyst has a general formula (I) or (II):

(Ar)₂MQ₂ (I);

or

R¹(Ar)₂MQ₂ (II)

wherein the metallocenes according to formula (I) are non-bridged metallocenes and the metallocenes according to formula (II) are bridged metallocenes;
wherein said metallocene according to formula (I) or (II) has two Ar bound to M which can be the same or different from each other;
wherein Ar is an aromatic ring, group or moiety and wherein each Ar is independently selected from the group consisting of cyclopentadienyl, indenyl, tetrahydroindenyl or fluorenyl, wherein each of said groups may be optionally substituted with one or more substituents each independently selected from the group consisting of halogen, a hydrosilyl, a SiR²₃ group wherein R² is a hydrocarbyl having 1 to 20 carbon atoms, and a hydrocarbyl having 1 to 20 carbon atoms and wherein said hydrocarbyl optionally contains one or more atoms selected from the group comprising B, Si, S, O, F, Cl and P;
wherein M is a transition metal M selected from the group consisting of titanium, zirconium, hafnium and vanadium; and preferably is zirconium;
wherein each Q is independently selected from the group consisting of halogen; a hydrocarboxy having 1 to 20 carbon atoms; and a hydrocarbyl having 1 to 20 carbon atoms and wherein said hydrocarbyl optionally contains one or more atoms selected from the group comprising B, Si, S, O, F, Cl and P; and
wherein R¹ is a divalent group or moiety bridging the two Ar groups and selected from the group consisting of a C₁-C₂₀ alkylene, a germanium, a silicon, a siloxane, an alkylphosphine and an amine, and wherein said R¹ is optionally substituted with one or more substituents each independently selected from the group consisting of halogen, a hydrosilyl, a SiR³₃ group wherein R³ is a hydrocarbyl having 1 to 20 carbon atoms, and a hydrocarbyl having 1 to 20 carbon atoms and wherein said hydrocarbyl optionally contains one or more atoms selected from the group comprising B, Si, S, O, F, Cl and P.

The term "hydrocarbyl having 1 to 20 carbon atoms" as used herein is intended to refer to a moiety selected from the group comprising a linear or branched C₁-C₂₀alkyl; C₃-C₂₀cycloalkyl; C₆-C₂₀aryl; C₇-C₂₀alkylaryl and C₇-C₂₀arylalkyl, or any combinations thereof. Exemplary hydrocarbyl groups are methyl, ethyl, propyl, butyl, amyl, isoamyl, hexyl, isobutyl, heptyl, octyl, nonyl, decyl, cetyl, 2-ethylhexyl, and phenyl. Exemplary halogen atoms include chlorine, bromine, fluorine and iodine and of these halogen atoms, fluorine and chlorine are preferred.

Illustrative examples of metallocene catalysts comprise but are not limited to bis(cyclopentadienyl) zirconium dichloride (Cp₂ZrCl₂), bis(cyclopentadienyl) titanium dichloride (Cp₂TiCl₂), bis(cyclopentadienyl) hafnium dichloride (Cp₂HfCl₂); bis(tetrahydroindenyl) zirconium dichloride, bis(indenyl) zirconium dichloride, and bis(n-butyl-cyclopentadienyl) zirconium dichloride; ethylenebis(4,5,6,7-tetrahydro-1-indenyl) zirconium dichloride, ethylenebis(1-indenyl) zirconium dichloride, dimethylsilylene bis(2-methyl-4-phenyl-inden-1-yl) zirconium dichloride, diphenylmethylene (cyclopentadienyl)(fluoren-9-yl) zirconium dichloride, and dimethylmethylene [1-(4-tert-butyl-2-methyl-cyclopentadienyl)](fluoren-9-yl) zirconium dichloride.

The term "chromium catalysts" refers to catalysts of chromium oxide. The chromium oxide may be deposited on a support, e.g. a silica or aluminium support. Illustrative examples of chromium catalysts comprise but are not limited to CrSiO₂ or CrAl₂O₃.

The present invention especially relates to Ziegler-Natta catalysts. The term "Ziegler-Natta catalyst" or "ZN catalyst" refers to catalysts having a general formula M¹Xᵥ, wherein M¹ is a transition metal compound selected from group IV to VII, wherein X is a halogen, and wherein v is the valence of the metal. Preferably, M¹ is a group IV, group V or group VI metal, more preferably titanium, chromium or vanadium and most preferably titanium. Preferably, X is chlorine or bromine, and most preferably, chlorine. Illustrative examples of the transition metal compounds comprise but are not limited to TiCl₃, TiCl₄. Suitable ZN catalysts for use in the invention are described in US6930071 and US6864207.

The product support member, after application of catalyst to the one or more subregions of its receiving surface, may subsequently be subjected to conditions for catalytic polymerization to form a polymeric product. The polymerization reaction is performed in the gas phase, preferably in a gas phase reactor. A gas phase reactor provides control of reaction pressure and optionally of temperature. The reaction carrier is placed into the gas phase reactor, which is fed with monomer, optionally hydrogen, and optionally one or more co-monomers. The monomers and optionally co-monomers are preferably in the gaseous state, or provided as an aerosol.

The feed into the reaction may be homopolymers of an olefin, or copolymers of two olefins; or copolymers of at least one olefin and at least one polymerizable comonomer.

Said olefins can be notably alpha-olefins such as ethylene propylene, butene-1, propene-1, hexene-1 and octene-1. Preferably, the olefin is selected from the group comprising ethylene, propylene and combination thereof. More preferably, the polyolefin is polyethylene or polypropylene or combination thereof. The polyolefin may be produced by any process and using any catalyst suitable for polymerizing ethylene and α-olefins.

Suitable polyethylene includes but is not limited to polyethylene obtained by homopolymerization of ethylene, copolymerization of ethylene and a higher 1-olefin co-monomer.

Suitable polypropylene includes but is not limited to polypropylene obtained by homopolymerization of propylene, copolymerization of propylene and an olefin co-monomer.

The term "co-monomer" refers to olefin co-monomers which are suitable for being polymerized with olefin monomers, preferably ethylene or propylene monomers. Co-monomers may comprise but are not limited to aliphatic C₂-C₂₀ alpha-olefins. Examples of suitable aliphatic C₂-C₂₀ alpha-olefins include ethylene, propylene, 1-butene, 4-methyl-1-pentene, 1-hexene, 1-octene, 1-decene, 1-dodecene, 1-tetradecene, 1-hexadecene, 1-octadecene and 1-eicosene. The term "co-polymer" refers to a polymer, which is made by linking two different types of in the same polymer chain. The term "homo-polymer" refers to a polymer which is made by linking olefin (preferably ethylene) monomers, in the absence of co-monomers.

According to a preferred aspect of the invention, the monomer is ethylene, optionally provided with one or more olefin co-monomers to form a polyethylene resin. The polyethylene resin prepared with the present reaction carrier can be an ethylene homo-polymer or an ethylene co-polymer.

The polymerization reaction may be performed at a temperature of 40-115 °C, preferably 50-70 °C. The operating pressure of the gas phase reactor may be 10-30 bar, preferably from 15-25 bar.

The polymerization reaction is generally allowed to proceed until completion. However, the reaction can be stopped at any time, for example, when evaluating a plurality of catalysts each having a different activity. Generally, when the catalysts under evaluation are from the same family, a reaction time of 2, 3, 4, 5, 6, 7, 8, 9, 10, 11, 12, 14, 16, 18, 20, 25, or 30 minutes can suffice. If insufficient product is formed, the reaction can be repeated for longer using a fresh reaction carrier. In the case of metallocene catalysts, for example, reaction time is preferably less than 10 minutes.

Typically a polymerization reaction is performed using a molar excess of monomer and optionally co-monomer to catalyst. Suitable ratios include a molar ratio of monomer and optionally co-monomer to catalyst of 10:1, 50:1, 100:1. It will be understood that the reaction carrier permits the testing of a wide range of conditions, thus the molar ratio need not be within the aforementioned ranged and optimised for every reaction.

Reference is made in the description below to the drawings which exemplify particular embodiments of the invention; they are not at all intended to be limiting. The skilled person may adapt the device and substituent components and features according to the common practices of the person skilled in the art.

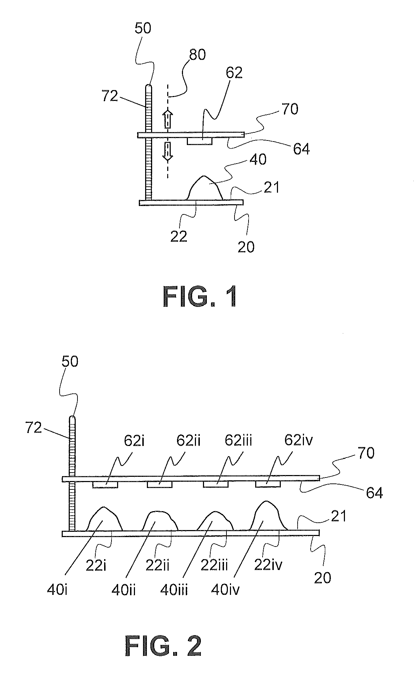

**FIG. 1** shows a schematic of an implementation of the invention where a receiving surface **21** of a rigid product support member **20** has a sub-region **22**, and a force sensor **62** is mounted on a rigid sensor support member, SSM, **70.** More precisely, the force sensor **62** is mounted on a supporting surface **64** thereof. A displacement mechanism **50** adjusts the distance between the SSM-mounted force sensor **62** and the product support member **20.** An axis of displacement **80** is indicated. By displacement of the SSM **70,** the force sensor **62** advances in a linear direction towards the sub-region **22** where it advances into and compresses the polymer product **40** and triggers a response by the force sensor **62.** The distance travelled by the SSM **70** or force sensor **62** is read-off a graduated scale **72** which distance can be used to calculate the degree of compression of the polymer.

**FIG. 2** shows a plurality of polymer products **40i** to **40iv** each disposed on a separate sub-region **22i** to **22iv** of a receiving surface **21** of a single product support member **20.** A plurality of force sensors **62i** to **62iv** is provided, one aligned over each sub-region **22i** to **22iv** and mounted on a sensor-supporting member (SSM) **70.** More precisely, the force sensors **62i** to **62iv** are mounted on a supporting surface **64** thereof. Force information from the sensors **62i** to **62iv** can be used to calculate the degree of compression of the polymer products **40i** to **40iv,** and the relative rheological properties.

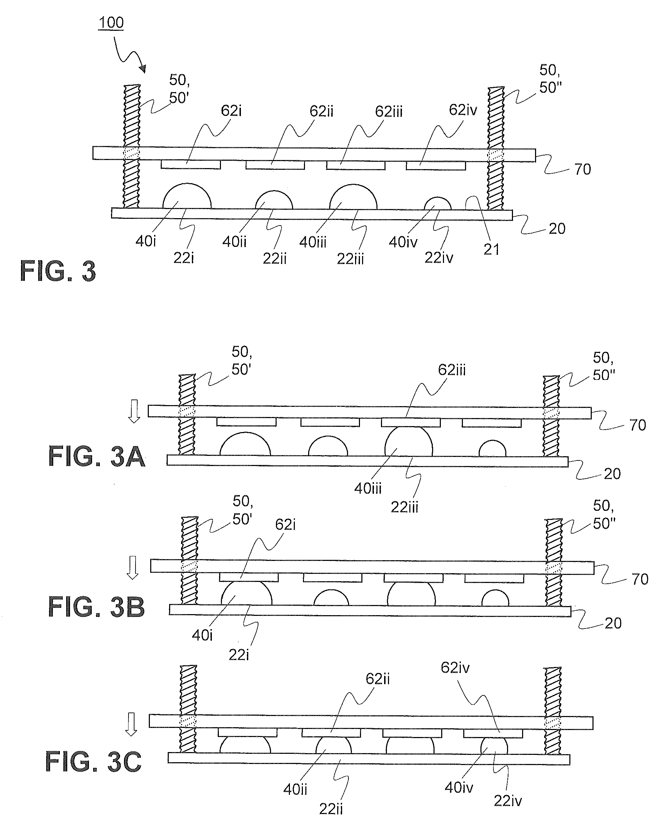

**FIG. 3** depicts an embodiment of the device **100** wherein there is a plurality of sub-regions (**22i, 22ii, 22iii, 22iv**) on the receiving surface **21** of the rigid product support member **20** and a plurality of complementary force sensors (**62i, 62ii, 62iii, 62iv**) arranged on the sensor-supporting member (SSM) **70.** More precisely, the force sensors **62i** to **62iv** are mounted on a supporting surface **64** thereof. Each sub-region (**22i, 22ii, 22iii, 22iv**) on the receiving surface **21** of the rigid product support member **20** is disposed with polymer product (**40i, 40ii, 40iii, 40iv**) to be quantified. A displacement mechanism **50** is provided that takes the form of a pair of threaded rods **50', 50",** each revolutely and dismountably attached to the rigid product support member **20 ,** the thread of which engages with a complementary threaded hole in the SSM **70.** Rotation of the threaded rods **50', 50"** is transformed into a linear translation of the SSM **70.** An indication of the distance moved by the SSM **70** can be deduced from the number of turns of the threaded rods **50', 50".** In **FIG. 3A****,** displacement mechanism **50** has been adjusted to advance the SSM **70** towards the reaction piles. The third force sensor **62iii** is compressing the third polymer product **40iii,** which would register a reading. In **FIG. 3B****,** displacement mechanism **50** has been adjusted to advance further the SSM **70** towards the polymer products. The first force sensor **62i** is compressing the first polymer product **40i,** which would register a reading in addition to the readings of the third force sensor **62iii** on which additional compressive forces have been applied. In **FIG. 3C****,** displacement mechanism **50** has been adjusted to advance further still the SSM **70** towards the polymer products. The second and fourth force sensors **62ii, 62iv** are in compressive contact with the second and fourth polymer products **40ii, 40iv,** which would start register readings.

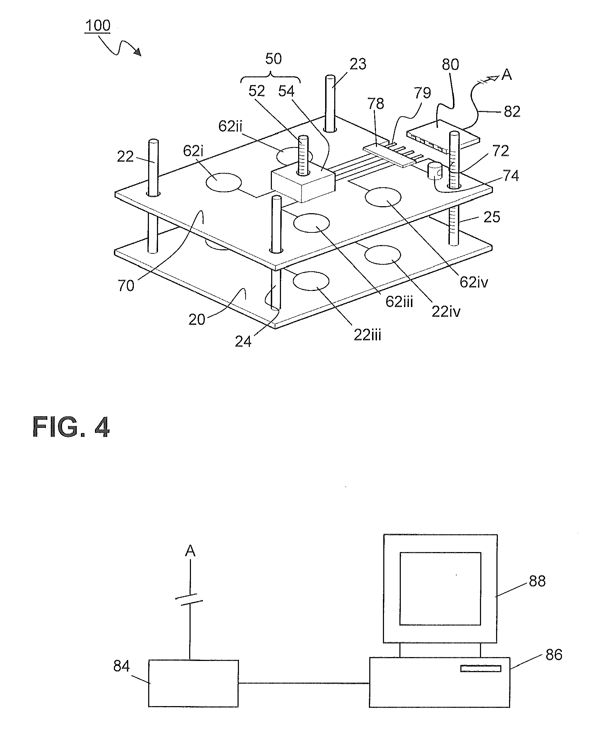

**FIG. 4** depicts an automated version of the device **100.** A plurality of sub-regions (**22ii, 22iv**) is provided on the receiving surface of a rigid product support member **20** and a plurality of complementary force sensors (**62i, 62ii, 62iii, 62iv**) is arranged on the sensor-supporting member (SSM) **70.** More precisely, the force sensors **62i** to **62iv** are mounted on a supporting surface **64** thereof. In **FIG. 4****,** the back (non-detecting) side of the sensors is shown. Each force sensor (**62i, 62ii, 62iii, 62iv**) is electrically connected to a port interface **78** present on the rear of the SSM **70.** Further provided is a displacement mechanism **50** comprising a toothed rod **52** (a rack of a rack and pinion assembly) dismountably rigidly attached to the rigid product support member **20** which passes freely through a hole in the SSM **70.** The teeth of the rod **52** engage with a cog (pinion) driven by to an electrical motor provided in a housing **54.** Linear displacement of the SSM **70** is controlled by the electrical motor in the housing **54.** The electrical motor may be a servo or stepper motor. The electrical motor is electrically connected to the port interface **78.** The SSM **70** is stabilised relative to the rigid product support member **20** by virtue of four supporting rods **(22, 23, 24, 25)** rigidly attached to the rigid product support member **20.** The SSM **70** is slidably connected to each supporting rod (**22, 23, 24, 25**) via a set of complementary holes, spatially arranged to align with the position of supporting rods (**22, 23, 24, 25**). A distance indicator is provided that is a combination of a linear encoder **74** and a graduated scale **72;** the linear encoder comprises a light source and detector (read-head) rigidly attached to the second rigid surface **70,** configured to detect the graduated scale **72** rigidly attached to on one of the supporting rods **25.** The linear encoder is electrically connected to the port interface **78.** The port interface **78** receives or provides electrical signals from or to the electrically components (*i.e.* force sensors, electrical motor, linear encoder). It may optionally provide power to one or more of the components. The port interface **78** also comprises a connector **79** for connection via a reciprocating connector **80** and cable **82** to a computer **86** optionally via a computer interface **84.**

### EXAMPLE

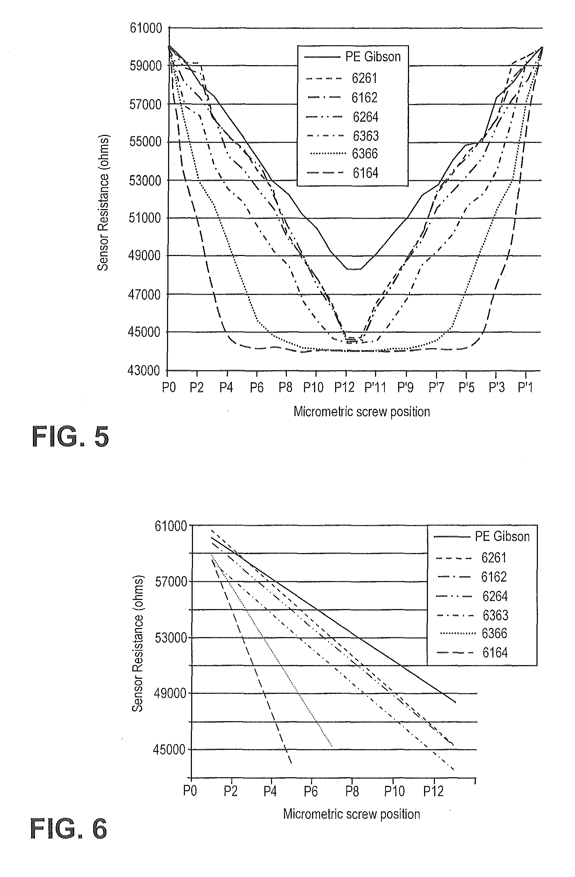

A rigid product support member according to the invention that was a flat (planar) glass plate was provided. Seven samples of polyethylene polymer product for testing were each deposited in a separate sub region of the receiving surface of the product support member. The product support member was placed on a heating block set to 70 deg C. One or more rheological properties of each sample was measured simultaneously using the device of the invention equipped with seven identical force sensors mounted on a SSM. The force sensors were FlexiForce^{™} sensors that output an electrical resistance that decreases with increasing force. Each force sensor was aligned over a sub-region or polymer product. The distance between the rigid product support member and the SSM was adjusted using a micrometric screw. As the start, the height of the sensor-supporting member was adjusted be just above the polymer products. A spirit level was used to ensure the rigid product support member and the SSM were parallel during measurement. By moving the screw regularly and noting the number of turns, electrical resistance measurements of the force sensor were performed by the invention as described. As contact was made with a polymer product and the polymer product was compressed, the resistance value of the force sensor dropped and continued to do so as the degree of compression increased, until a saturation of the force sensors for all the products was reached. **FIG. 5** shows a graph of the force (inversely proportional to the resistance) detected by the seven force sensor in terms the resistance of the sensor, as a function of displacement of the sensors.

The graph shows a symmetry between the left part of the curve (compression) and the right part of the curve (uncompression). Changes induced by compression of the samples are reversible in view that the polymers are elastically deformable.

Some samples (6164 and 6366) more rapidly approach the limit of detection by the force sensor (*i.e.* saturate the sensor at about 44 000 Ohms) for the applied compression. This rapid saturation reflects a strong compressive strength from the polyethylene. Some polymers, including PE Gibson, did not reach the saturation point of the force sensor. This reflects that under the compressive forces, the polymer absorbs some of the force by elasticity. Gibson is a 100% linear polyethylene polymer, one can hypothesize that the pressure channels have more degrees of freedom to move and therefore adapt to deformation than the other, which are PE ethylene / hexene, and which would make the connections more difficult the movement of channels from each other. Other materials (*e.g.* 6162, 6261, 6363) exhibit intermediate behaviour with a gradual decrease in the electrical resistance gradually as the force increases.

The behaviour of the compressibility of polymer products in the solid state was analysed in further detail. Part of the graph of **FIG. 5** illustrating the compression phase is given was examined (**FIG. 6**), and the linear trend of each curve determined, prior to saturation of the sensor. The values of their slopes are given in **Table 1.**

**Table 1: Table showing the gradient of each of the lines in FIG. 6 and the degree of compressibility.**

| **Polymer** | **Gradient** | **Compressibility** |
|---|---|---|
| 6162 | -1290 | intermediate |
| 6261 | -1284 | intermediate |
| 6363 | -1252 | intermediate |
| 6164 | -3611 | low |
| 6264 | -1214 | intermediate |
| 6366 | -2267 | low |
| PE Gibson | -982 | high |

According to the graph and the table of values, a polymer that is more resistant to compression yields a line having a greater (steeper) slope. Conversely, if the polymer deforms to absorb compression, the slope of the line is lower. Polymers 6261 and 6162 having very similar curves have almost identical slopes, respectively -1290 and -1284. By comparison with well known standards, the invention allows a classification of a new material (*e.g.* deformable or, reversible or irreversible to a greater or lesser degree than the standard)

## Claims

1. A method for determining one or more rheological properties of a polymer product (40), comprising the steps:
- providing the polymer product (40) on a sub-region (22) of a receiving surface (21) of the product support member (20), which polymer product (40) has been produced in the form of a reaction pile by performing a gas phase polymerisation on the receiving surface (21) of the product support member (20);
- gradually compressing the polymer product (40) during a compression phase between a force sensor (62) and the product support member (20);
- measuring force applied to the polymer product (40) during at least part of the compression phase; and
- determining from a degree of compression of the polymer product as a function of the measured force, one or more rheological properties of the polymer product (40), the one or more rheological properties being determined from the output of the force sensor (62) as a function of the degree of compression of the polymer product.

2. Method according to claim 1, wherein the polymer product is formed by:
- dispensing polymerisation catalyst onto the sub-region (22) of the receiving surface of the product support member (20);
- placing the product support member (20) into a gas-phase polymerisation reactor;
- performing a gas-phase catalysed polymerisation reaction, to form the polymer product (40) that is retained on the receiving surface of the product support member (20); and
- removing the product support member (20) from the gas phase polymerisation reactor, thereby providing the polymer product (40) on a sub-region (22) of a receiving surface of a product support member (20) for determination of the one or more rheological properties.

3. A method for determining simultaneously for each of a plurality of separate polymer products (40i, 40ii, 40iii, 40iv), one or more rheological properties comprising performing the method of claim 1 or 2, wherein:
- each polymer product of the plurality (40i, 40ii, 40iii, 40iv) is simultaneous and separately gradually compressed;
- the force applied to each polymer product (40i, 40ii, 40iii, 40iv) during at least part of the gradual compression is measured; and
- one or more rheological properties of each polymer product (40i, 40ii, 40iii, 40iv) is determined from the degree of compression as a function of the measured force.

4. Method according to claim 3, wherein:
- each of the plurality of polymer products (40i, 40ii, 40iii, 40iv) is provided on a separate sub-region (22i, 22ii, 22iii, 22iv) of the receiving surface of the product support member (20);
- each of the plurality of polymer products (40i, 40ii, 40iii, 40iv) is contacted with a separate force sensor (62i, 62ii, 62iii, 62iv);
- each of the plurality of polymer products is simultaneously compressed between the force sensors and the product support member; and
- one or more rheological properties of each of the plurality of polymer products (40i, 40ii, 40iii, 40iv) is determined from a degree of compression as a function of the measured force.

5. Method according to any of claims 1 to 4, wherein:
- the polymer product (40) is gradually compressed during the compression stage;
- the polymer product (40) is subsequently gradually uncompressed during an uncompression stage;
- the force applied to the polymer product (40) is measured during at least part of the compression stage and at least part of the uncompression stage; and
- the one or more rheological properties of the polymer product (40) are determined from the degree of compression as a function of the measured force during the compression and uncompression stages.

## Patentansprüche

1. Verfahren zur Bestimmung eines oder mehrerer rheologischen Merkmale eines Polymerprodukts (40), umfassend die Schritte:
- Bereitstellen des Polymerprodukts (40) an eine Subregion (22) einer empfangenden Oberfläche (21) des Produktausbauelements (20), wobei das Polymerprodukt (40) in Form eines Reaktionsstapels mittels Durchführung einer Gasphasen-Polymerisation an der empfangenden Oberfläche (21) des Produktausbauelements (20) produziert worden ist;
- allmähliches Verdichten des Polymerprodukts (40) während einer Verdichtungsphase zwischen einem Kraftsensor (62) und dem Produktausbauelement (20);
- Messen der Kraft, die während wenigstens einem Teil der Verdichtungsphase auf das Polymerprodukt (40) ausgeübt wird; und
- Bestimmen eines Ausmaßes an Verdichtung des Polymerprodukts in Abhängigkeit der gemessenen Kraft, eines oder mehrerer rheologischen Merkmale des Polymerprodukts (40), wobei die eine oder mehreren rheologischen Merkmale von der Leistung des Kraftsensors (62) in Abhängigkeit des Ausmaßes der Verdichtung des Polymerprodukts bestimmt wird.

2. Verfahren nach Anspruch 1, wobei das Polymerprodukt durch Folgendes ausgebildet wird:
- Abgabe eines Polymerisationskatalysator an die Subregion (22) der empfangenden Oberfläche des Produktausbauelements (20);
- Stellen des Produktausbauelements (20) in einen Gasphasen-Polymerisationsreaktor;
- Durchführung einer gasphasen-katalysierten Polymerisationsreaktion, um das Polymerprodukt (40) auszubilden, das an der empfangenden Oberfläche des Produktausbauelements (20) zurückbleibt; und
- Entfernen des Produktausbauelements (20) vom Gasphasen-Polymerisationsreaktor, wodurch das Polymerprodukt (40) an einer Subregion (22) einer empfangenden Oberfläche eines Produktausbauelements (20) zur Bestimmung des einen oder der mehreren rheologischen Merkmale bereitgestellt wird.

3. Verfahren zu gleichzeitigen Bestimmung für jedes einer Vielzahl von separaten Polymerprodukten (40i, 40ii, 40iii, 40iv) des einen oder der mehreren rheologischen Merkmale, umfassend die Durchführung des Verfahrens nach Anspruch 1 oder 2, wobei:
- jedes Polymerprodukt der Vielzahl (40i, 40ii, 40iii, 40iv), gleichzeitig und separat, allmählich verdichtet wird;
- die auf jedes Polymerprodukt (40i, 40ii, 40iii, 40iv) während wenigstens eines Teils der allmählichen Verdichtung ausgeübte Kraft allmählich gemessen wird; und
- ein oder mehrere rheologische Merkmale jedes Polymerprodukts (40i, 40ii, 40iii, 40iv) anhand des Ausmaßes der Verdichtung in Abhängigkeit der gemessenen Kraft bestimmt werden.

4. Verfahren nach Anspruch 3, wobei:
- jedes der Vielzahl von Polymerprodukten (40i, 40ii, 40iii, 40iv) an einer separaten Subregion (22i, 22ii, 22iii, 22iv) der empfangenden Oberfläche des Produktausbauelements (20) bereitgestellt ist;
- jedes der Vielzahl von Polymerprodukten (40i, 40ii, 40iii, 40iv) mittels eines separaten Kraftsensors (62i, 62ii, 62iii, 62iv) kontaktiert wird;
- jedes der Vielzahl von Polymerprodukten gleichzeitig zwischen den Kraftsensoren und dem Produktausbauelement verdichtet wird; und
- ein oder mehrere rheologische Merkmale jedes der Vielzahl von Polymerprodukten (40i, 40ii, 40iii, 40iv) anhand eines Ausmaßes der Verdichtung in Abhängigkeit der gemessenen Kraft bestimmt wird.

5. Verfahren nach einem der Ansprüche 1 bis 4, wobei:
- das Polymerprodukt (40) während der Verdichtungsphase allmählich verdichtet wird;
- das Polymerprodukt (40) anschließend während einer Dekompressionsphase allmählich dekomprimiert wird;
- die auf das Polymerprodukt (40) ausgeübte Kraft während dem letzten Teil der Verdichtungsphase und wenigstens als Teil der Dekompressionsphase gemessen wird; und
- das eine oder die mehreren rheologischen Merkmale des Polymerprodukts (40) anhand des Ausmaßes der Verdichtung in Abhängigkeit der während der Verdichtungs- und Dekompressionsphasen gemessenen Kraft bestimmt werden.

## Revendications

1. Procédé pour déterminer une ou plusieurs propriétés rhéologiques d'un produit polymère (40), comprenant les étapes consistant à :
- disposer le produit polymère (40) sur une sous-région (22) d'une surface réceptrice (21) de l'élément de support de produit (20), le produit polymère (40) ayant été produit sous la forme d'une pile réactionnelle par mise en oeuvre d'une polymérisation en phase gazeuse sur la surface réceptrice (21) de l'élément de support de produit (20) ;
- compresser graduellement le produit polymère (40) durant une phase de compression entre un capteur de force (62) et l'élément de support de produit (20) ;
- mesurer la force appliquée au produit polymère (40) durant au moins une partie de la phase de compression ; et
- déterminer, à partir du degré de compression du produit polymère en fonction de la force mesurée, une ou plusieurs propriétés rhéologiques du produit polymère (40), la ou les propriétés rhéologiques étant déterminées à partir de la sortie du capteur de force (62) en fonction du degré de compression du produit polymère.

2. Procédé selon la revendication 1, dans lequel le produit polymère est formé par :
- distribution du catalyseur de polymérisation sur la sous-région (22) de la surface réceptrice de l'élément de support de produit (20) ;
- placement de l'élément de support de produit (20) dans un réacteur de polymérisation en phase gazeuse ;
- mise en oeuvre d'une réaction de polymérisation catalysée en phase gazeuse, pour former le produit polymère (40) qui est retenu sur la surface réceptrice de l'élément de support de produit (20) ; et
- retrait de l'élément de support de produit (20) hors du réacteur de polymérisation en phase gazeuse, en disposant ainsi le produit polymère (40) sur une sous-région (22) d'une surface réceptrice d'un élément de support de produit (20) pour la détermination de la ou des propriétés rhéologiques.

3. Procédé pour déterminer simultanément, pour chacun parmi une pluralité de produits polymères séparés (40i, 40ii, 40iii, 40iv), une ou plusieurs propriétés rhéologiques, comprenant la mise en oeuvre du procédé de la revendication 1 ou 2, dans lequel :
- chaque produit polymère de la pluralité (40i, 40ii, 40iii, 40iv) est simultanément et séparément compressé graduellement ;
- la force appliquée à chaque produit polymère (40i, 40ii, 40iii, 40iv) durant au moins une partie de la compression graduelle est mesurée ; et
- une ou plusieurs propriétés rhéologiques de chaque produit polymère (40i, 40ii, 40iii, 40iv) sont déterminées à partir du degré de compression en fonction de la force mesurée.

4. Procédé selon la revendication 3, dans lequel :
- chacun parmi la pluralité de produits polymères (40i, 40ii, 40iii, 40iv) est disposé sur une sous-région séparée (22i, 22ii, 22iii, 22iv) de la surface réceptrice de l'élément de support de produit (20) ;
- chacun parmi la pluralité de produits polymères (40i, 40ii, 40iii, 40iv) est mis en contact avec un capteur de force séparé (62i, 62ii, 62iii, 62iv) ;
- chacun parmi la pluralité de produits polymères est simultanément compressé entre les capteurs de force et l'élément de support de produit ; et
- une ou plusieurs propriétés rhéologiques de chacun parmi la pluralité de produits polymères (40i, 40ii, 40iii, 40iv) sont déterminées à partir du degré de compression en fonction de la force mesurée.

5. Procédé selon l'une quelconque des revendications 1 à 4, dans lequel :
- le produit polymère (40) est graduellement compressé durant l'étape de compression ;
- le produit polymère (40) est ensuite graduellement décompressé durant une étape de décompression ;
- la force appliquée au produit polymère (40) est mesurée durant au moins une partie de l'étape de compression et au moins une partie de l'étape de décompression ; et
- une ou plusieurs propriétés rhéologiques du produit polymère (40) sont déterminées à partir du degré de compression en fonction de la force mesurée durant les étapes de compression et de décompression.
